# FASCICULE DE BREVET EUROPEEN

(11) **EP 3 691 954 B1**
(45) Date de publication et mention de la délivrance du brevet: **09.03.2022**
(21) Numéro de dépôt: 18807393.6
(22) Date de dépôt: 04.10.2018
(51) Int. Cl.: B61L 23/04, G01V 8/10, B61K 9/00

(54) **DISPOSITIF DE MESURE DU MOUVEMENT D'UN RAIL AU PASSAGE D'UN TRAIN**
VORRICHTUNG ZUR MESSUNG DER BEWEGUNG EINER SCHIENE BEI DER DURCHFAHRT EINES ZUGES
DEVICE FOR MEASURING THE MOVEMENT OF A RAIL DURING THE PASSAGE OF A TRAIN

(30) Priorité: 04.10.2017 FR 1759297
(43) Date de publication de la demande: 12.08.2020
(73) Titulaire: Butterworth, Jack, 91430 Igny (FR)
(72) Inventeur: Butterworth, Jack, 91430 Igny (FR)
(74) Mandataire: Cabinet HERRBURGER
(86) Numéro de dépôt international: PCT/FR2018/052451
(87) Numéro de publication internationale: WO 2019/069030

(56) Documents cités:
- DE-A1- 2 831 916
- DE-A1- 10 040 139
- JP-A- 2008 255 595
- US-A1- 2008 304 083

## Description

### Domaine de l'invention

La présente invention se rapporte à un dispositif de mesure du mouvement d'un rail au passage d'un train et en particulier la mesure de la composante linéaire dans une direction donnée du mouvement du rail.

### Etat de la technique

Il est habituel de vérifier l'état du réseau de rails. L'une des vérifications les plus importantes et difficiles à faire consiste à détecter le mouvement vertical du rail pour intervenir si ce mouvement dépasse un seuil critique dangereux pour la circulation des trains.

Il n'existe actuellement aucun moyen simple permettant de mesurer ces déplacements au passage d'un train. Seuls des moyens empiriques et indirects pour tenter de déceler le mouvement vertical excessif d'un rail sont appliqués actuellement. Selon les procédés connus, il faut faire des mesures et des relevés sur les rails, ce qui nécessite le passage d'agents pour installer des dispositifs de mesure, attendre le passage d'un train et faire le relevé. Cette solution complexe à réaliser ne permet que des mesures ponctuelles avec le déplacement sur le terrain. Il s'agit d'interventions complexes et coûteuses qui ne sont faites que dans les cas extrêmes, lorsque les effets autres et concordants montrent la nécessité d'une intervention sur les rails.

Il est connu selon le document DE28319116 de mesurer le décalage d'une voie ferrée, produit par l'utilisation de cette voie, par rapport à la position initiale ou position théorique d'installation.

Pour cela, ce document décrit un procédé et une installation permettant de détecter la position des rails de la voie par rapport à un repère constitué par un faisceau, par exemple, un faisceau laser installé le long d'un segment de voie à mesurer.

L'installation de mesure comprend des moyens de mesure portés par un chariot se déplaçant sur la voie et dont la position est asservie sur le faisceau en bordure de voie.

Cela permet de mesurer la position en hauteur et en largeur des deux rails de la voie par rapport à cette ligne de référence le chariot se déplaçant le long de ce segment de voie. Le chariot doit être suffisamment léger pour ne pas influencer la position des rails de la voie et permettre d'obtenir les coordonnées de position précises des rails de la voie. Ensuite, on compare cette position à la position théorique ou initiale pour éventuellement intervenir sur la voie et corriger son positionnement.

### But de l'invention

La présente invention a pour but de développer un moyen simple permettant de détecter de manière efficace et suivie le mouvement ou le déplacement d'un rail ou d'une voie au passage d'un train et notamment en différents endroits du rail ou d'un tronçon de voie.

### Exposé et avantages de l'invention

A cet effet, l'invention a pour objet un dispositif de mesure de la composante linéaire dans une direction donnée du mouvement d'un rail au passage d'un train selon la revendication 1.

Le dispositif de mesure selon l'invention permet de détecter la composante du mouvement du rail, en général la composante verticale du mouvement du rail au passage d'un train et de comparer ce résultat à un seuil critique pour surveiller l'évolution de ce mouvement et intervenir si le seuil critique est dépassé.

Ce dispositif simple et fiable peut être installé en plusieurs endroits d'un rail ou d'un tronçon de voie de façon à recueillir une image fidèle de l'évolution du positionnement du rail sans nécessiter une présence humaine régulière et suivie des dispositifs de mesure par un agent sur le terrain.

Les dispositifs de mesure bien que solidaires en mouvement du rail mais non définitivement fixés à celui-ci, sont récupérés après une campagne de surveillance d'une voie ou d'un tronçon de voie pour les installer sur un autre tronçon à surveiller.

Les informations recueillies sont stockées dans le dispositif et récupérées régulièrement par le passage d'un collecteur d'informations ou transmises vers un poste central qui, lui, surveille de façon centralisée et en continu l'ensemble et qui peut notamment détecter l'enlèvement frauduleux de tel ou tel dispositif de mesure.

Cette collecte centralisée évite le déplacement d'un agent pour relever les informations et permet de suivre en temps réel l'évolution du mouvement d'un rail.

Selon une caractéristique avantageuse, la barrière lumineuse est formée de deux émetteurs et de deux récepteurs correspondants, ce qui améliore la sécurité et la précision, notamment par un effet de vernier.

Selon l'invention, les zones actives sont soit des zones opaques qui coupent le faisceau, ces zones opaques étant alors séparées par des zones transparentes, soit encore des zones réfléchissantes qui renvoient le faisceau. Dans les deux cas, il y a comptage des impulsions lumineuses générées par le faisceau traversant les zones transparentes ou le faisceau réfléchi.

De façon avantageuse, on met en place au moins trois profils perpendiculaires à la voie, soit six capteurs opposés deux à deux pour comparer les variations éventuelles de dévers entre les deux profils de rail et comparer les variations de gauche entre deux profils. Le « gauche » est la différence de dévers entre deux profils adjacents.

La mise en place du dispositif de mesure selon l'invention est particulièrement simple puisqu'il suffit de le fixer à l'infrastructure et de relier solidairement l'index au rail pour transmettre les mouvements de celui-ci dont on détecte la composante dans une certaine direction telle que la direction verticale.

Un avantage est d'isoler le capteur des impacts du passage des trains sur les rails en fixant le capteur à l'infrastructure, seul l'index supportant les impacts.

Suivant une autre caractéristique, le dispositif comporte un poste central et le dispositif est en liaison avec le poste central par une liaison émetteur/radio pour la transmission des signaux et leur traitement final dans le poste central ainsi que la collecte des résultats de plusieurs dispositifs de mesure installés sur le site. Les informations peuvent également être transmises vers le poste central par le réseau Internet à travers une passerelle (gateway).

Suivant une autre caractéristique, le dispositif de mesure comporte un système de géolocalisation permettant d'envoyer au poste central la position précise de chaque dispositif de mesure le long d'un rail.

Suivant une autre caractéristique avantageuse, le dispositif de mesure comporte un capteur de vibrations permettant de réveiller la barrière lumineuse pour effectuer la mesure au passage d'un train.

Suivant une autre caractéristique avantageuse, le dispositif de mesure comporte une horloge pour affecter un instant aux séquences de mouvement du rail.

### Dessins

La présente invention sera décrite ci-après de manière plus détaillée à l'aide d'un exemple de dispositif de mesure de la composante linéaire du mouvement d'un rail au passage d'un train représenté dans les dessins annexés dans lesquels :
- la figure 1 est un schéma par blocs du dispositif de mesure,
- la figure 2 est un schéma d'un exemple d'index en forme de réseau du dispositif de mesure de la figure 1,
- la figure 3 est un schéma d'un autre exemple de réseau de l'index du dispositif de mesure de la figure 1,
- la figure 4 est un schéma par blocs du dispositif de mesure de mouvement.

### Description d'un mode de réalisation de l'invention

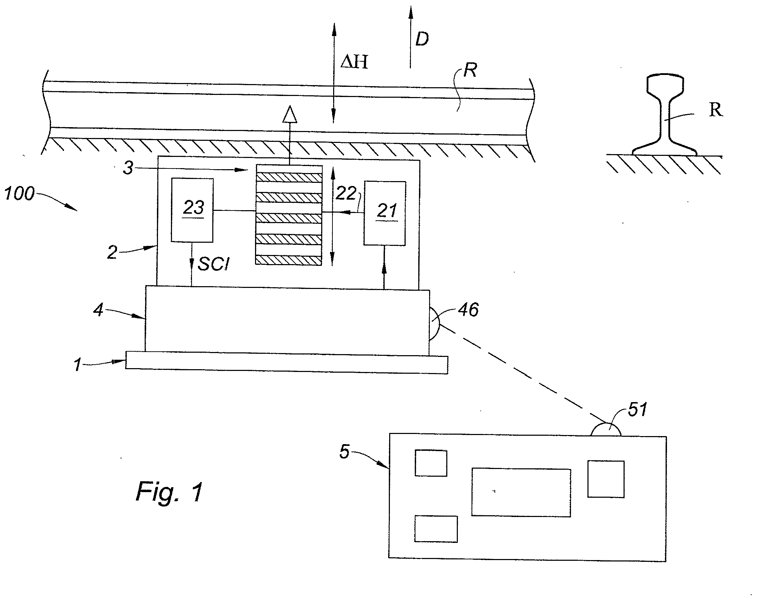

Selon la figure 1, l'invention a pour objet un dispositif de mesure 100 de la composante linéaire dans une direction donnée D du mouvement d'un rail R au passage d'un train. Ce dispositif est installé au voisinage de l'endroit surveillé d'un rail ou d'un tronçon de voie. Il s'agit en général de détecter les mouvements verticaux du rail, notamment pour relever le dépassement d'un seuil critique. De façon plus générale, le dispositif de mesure 100 est destiné à détecter la composante du mouvement ΔH du rail R dans une certaine direction (D).

Le dispositif 100 installé de manière fixe sur l'infrastructure a un témoin de mouvement en forme d'index 3 relié au rail R par une liaison solidaire en mouvement.

Le dispositif 100 se compose d'un support 1, fixe, logeant un dispositif d'exploitation 4 et d'un capteur optique 2 en forme de barrière lumineuse ayant un photoémetteur 21 générant un faisceau lumineux 22 arrivant sur un photorécepteur 23. Le dispositif 100 comporte également un index 3 en forme de réseau placé dans le faisceau lumineux 22 pour le couper par alternance et permettre ainsi de mesurer le débattement ΔH du rail R dans cette direction (D) par le comptage des coupures du faisceau de la barrière lumineuse par le mouvement de l'index 3 solidaire du rail R.

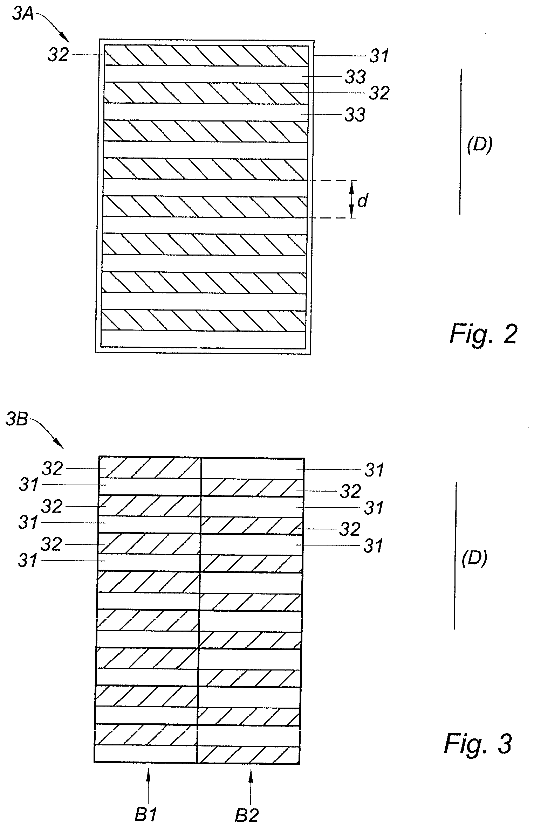

La figure 2 montre un premier exemple d'index 3A formé d'un cadre 31 portant une succession de barres 32 et de bandes 33 réalisant ainsi une succession de zones opaques (32) et de zones transparentes (33) traversées par le faisceau lumineux 22 ou bloquant celui-ci. L'index 3 est mobile en translation dans la direction (D) de la composante de mouvement à détecter de sorte que les barres 32 coupent successivement le faisceau 22 arrivant sur le récepteur 23, ce qui génère des impulsions représentant ces coupures.

Les zones transparentes (33) et les zones opaques (32) (appelées de manière générale barres), se répètent suivant un motif ou une alternance représentant une distance donnée (d). Cette distance (d) est la même sur tout l'index 3 de sorte que le comptage des impulsions générées par l'interruption du faisceau 22 arrivant sur le photorécepteur 23 est représentatif du déplacement ΔH du rail R dans la direction (D). Le comptage correspond à un déplacement relatif à partir de la position de repos de l'index 3.

Le mouvement du rail R étant élastique, il en est de même du mouvement de l'index 3 qu'il porte et donc du mouvement du rail R et des coupures du faisceau 22 de la barrière lumineuse. On obtient ainsi des séries d'impulsions de coupure SCi du faisceau par le mouvement du réseau de barres dans une direction (D+) et dans la direction opposée (D-) pour le retour.

Ces séries d'impulsions sont en principe égales et selon le cas, elles sont séparées en fin d'excursion (entre le mouvement aller et le mouvement retour) par un intervalle plus grand que l'intervalle entre deux coupures, à cause du temps d'inversion du mouvement du rail R et du réseau 3. Si cet intervalle est court et confondu avec l'intervalle entre deux barres 32, le comptage donnera une distance double qu'il sera facile de déceler et de corriger au cours du traitement des impulsions.

Le réseau 3 peut être réalisé de différentes manières et les barres 32 ou bandes opaques et les intervalles transparents 33 ne sont qu'un exemple de zones transparentes 33 et de zones opaques 32. Les barres 32 peuvent être des barres réelles séparées par des intervalles, ce qui a l'avantage d'éviter de dépôt de poussière sur les zones transparentes constituées par ces intervalles. Les zones en forme de « barres » matérialisées ou non ont l'avantage d'être insensibles aux mouvements de déplacement transversaux dans la mesure où ceux-ci sont limités à la largeur du réseau 3 qui est la direction longitudinale des « barres ».

Selon une variante représentée à la figure 3, l'index 3B est composé de deux bandes B1, B2 orientées globalement dans la direction (D) de la mesure, avec des barres 32 en position décalée, opposée, pour être lues par deux faisceaux 22 d'une double barrière lumineuse, permettant un contrôle du fonctionnement et d'éliminer certains aléas de lecture. On peut également faire un comptage avec un effet de vernier en réalisant la deuxième bande B2 avec une distribution de barres 32 selon le principe du vernier, associé à la première bande B1 dans laquelle la distribution des barres 32 est la distribution normale. Le dispositif de vernier permet d'augmenter la précision de la mesure et d'identifier la position des zones actives (zones opaques ou zones réfléchissantes).

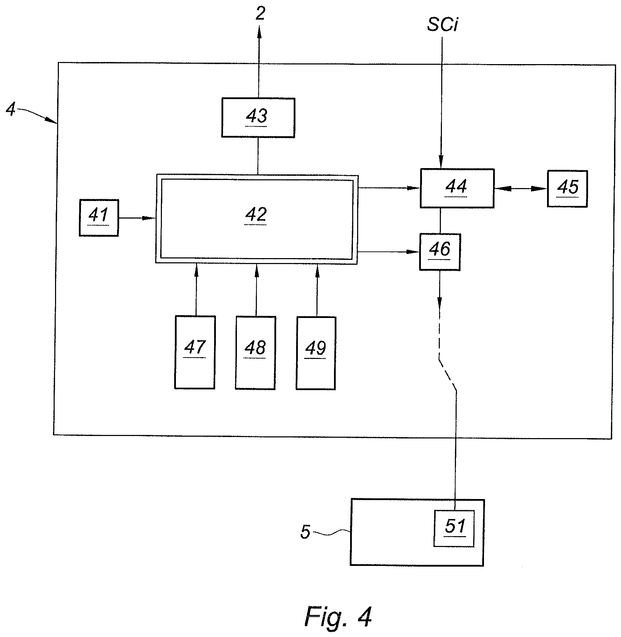

Selon la figure 4, le dispositif d'exploitation 4 intégré au support 1 est constitué par une alimentation électrique 41 telle qu'une batterie, un circuit de gestion 42 de la barrière lumineuse 2, un circuit de commande 43 du faisceau 22, un circuit de mise en forme et d'enregistrement 44 des signaux SCi dans une mémoire 45 ainsi qu'un émetteur/récepteur 46 pour transmettre les signaux ou plus généralement les résultats de l'exploitation des signaux détectés vers l'émetteur-récepteur 51 d'un poste central 5 qui recueille les signaux de mesure des dispositifs 100 de la voie surveillée (R). Le dispositif d'exploitation a également une horloge 47 et un système de géolocalisation 48 pour associer automatiquement les résultats des mesures à un point géographique du rail sans nécessiter à chaque nouvelle installation, la mesure de la position et son enregistrement dans le dispositif 100 par l'opérateur qui installe le dispositif 100 le long du tronçon de voie surveillé.

Selon une variante non représentée, la barrière lumineuse est formée de deux émetteurs et de deux récepteurs correspondants. De façon générale, la barrière lumineuse comporte des zones actives qui sont des zones opaques séparées par des zones transparentes. Les zones opaques coupent le faisceau. Les zones actives peuvent également être des zones réfléchissantes, écartées les unes des autres d'un intervalle déterminé, et ces zones réfléchissantes renvoient le faisceau.

Dans les deux cas, les zones actives coopèrent avec le faisceau pour générer des signaux d'interaction du faisceau dans le récepteur correspondant.

Le poste central 5 a un émetteur/récepteur 51 communiquant avec l'émetteur/récepteur 46 des dispositifs 100 et des moyens de traitement non détaillés pour l'exploitation des signaux.

L'exploitation des impulsions SCi de comptage est faite soit sur le site dans le dispositif d'exploitation 4 traitant les impulsions SCi pour fournir des états de comptage corrigés, représentatifs du dé-

Le capteur 49 associé au rail R équipe de préférence la liaison mécanique reliant le rail à l'index 3 du dispositif de mesure 100.

Bien que le dispositif 100 soit robuste et non particulièrement sensible à la poussière, il est avantageux de loger la barrière lumineuse 21, 22, 23 dans une enceinte 11 solidaire du support 1 et de relier l'index 3 au rail R par une liaison mécanique 35 traversant l'enceinte 11 par une ouverture de dimensions réduites, par exemple une fente, pour diminuer l'éventuelle pénétration de poussière dans l'intervalle de la barrière lumineuse.

Une réalisation avantageuse non représentée consiste à remplacer la fente latérale par un orifice sur le dessus de l'enceinte. Cet orifice sera alors traversé par la liaison mécanique en forme de tige coudée dont le mouvement au passage de l'orifice est un simple coulissement. Cela facilite la réalisation de l'étanchéité de l'enceinte 11.

## Revendications

1. Dispositif de mesure de la composante linéaire dans une direction donnée (D) du mouvement d'un rail (R) au passage d'un train comprenant :
- une barrière lumineuse solidaire de l'infrastructure de voie et isolée des impacts du passage des trains sur le rail, formée d'au moins un émetteur (21) d'un faisceau lumineux (22) vers un récepteur (23) correspondant,
- un index (3) solidaire du mouvement du rail (R), le dispositif étant **caractérisé en ce que** l'index est formé d'une
succession de zones actives (32) d'écartement donné (d), les zones actives étant des zones opaques ou réfléchissantes qui coupent le faisceau et qui sont séparées par des zones transparentes, cet index étant placé dans le faisceau lumineux (22) de façon à coopérer avec le faisceau (22),
l'index (3) coopérant avec le faisceau par le mouvement de déplacement (ΔH) du rail (R) par les zones actives qui coupent le faisceau par alternance, de façon à générer une succession de signaux d'interaction (SCi) du faisceau (22) dans le récepteur (23) correspondant, le dispositif étant en outre **caractérisé en ce qu'**il comprend
- un dispositif d'exploitation (4) recevant les signaux d'interaction (SCi) du récepteur (23) pour les compter par séquence de mouvement du rail, ce comptage correspondant à la composante linéaire du mouvement de déplacement (ΔH) du rail relatif à partir de la position de repos de l'index (3).

2. Dispositif de mesure selon la revendication 1,
**caractérisé en ce que**
la barrière lumineuse est formée de deux émetteurs (21) et de deux récepteurs (23) correspondants.

3. Dispositif de mesure selon la revendication 1,
**caractérisé en ce que**
les zones actives sont des zones opaques qui coupent le faisceau, ces zones opaques étant séparées par des zones transparentes laissant passer le faisceau ou les zones actives sont des zones réfléchissantes qui renvoient le faisceau.

4. Dispositif de mesure selon la revendication 1,
**caractérisé en ce qu'**
il comporte un poste central (5) muni d'un récepteur (51), le dispositif (100) installé près du rail comportant un émetteur (46) pour l'émission des signaux du dispositif d'exploitation (4) vers le poste central (5).

5. Dispositif de mesure selon la revendication 4,
**caractérisé en ce qu'**
il comporte un système de géolocalisation (48) pour fournir au poste central (5) la position du dispositif de mesure (100).

6. Dispositif de mesure selon la revendication 1,
**caractérisé en ce qu'**
il comporte un capteur de vibrations (49) détectant les vibrations pour réveiller la barrière lumineuse au passage d'un train et mettre la barrière lumineuse en sommeil lorsque le rail est au repos.

7. Dispositif de mesure selon la revendication 1,
**caractérisé en ce qu'**
il comporte une horloge (47) pour affecter un temps aux séquences de mouvement.

## Patentansprüche

1. Vorrichtung zur Messung der linearen Komponente in einer gegebenen Richtung (D) der Bewegung einer Schiene (R) bei der Durchfahrt eines Zuges, umfassend:
- eine Lichtschranke, die mit dem Gleisunterbau fest verbunden und von der Wirkung der Durchfahrt von Zügen auf der Schiene isoliert ist, die von mindestens einem Sender (21) eines Lichtstrahls (22) zu einem entsprechenden Empfänger (23) gebildet wird,
- einen Index (3), der mit der Bewegung der Schiene (R) fest verbunden ist, wobei die Vorrichtung **dadurch gekennzeichnet ist, dass** der Index von einer Abfolge von aktiven Zonen (32) mit einem gegebenen Abstand (d) gebildet wird, wobei die aktiven Zonen lichtundurchlässigen oder reflektierenden Zonen entsprechen, die den Strahl schneiden und die durch transparente Zonen getrennt sind, wobei dieser Index so in dem Lichtstrahl (22) platziert ist, dass er mit dem Strahl (22) zusammenwirkt,
wobei der Index (3) mit dem Strahl durch die Verschiebebewegung (ΔH) der Schiene (R) durch die aktiven Zonen zusammenwirkt, die den Strahl abwechselnd schneiden, um eine Abfolge von Wechselwirkungssignalen (SCi) des Strahls (22) im entsprechenden Empfänger (23) zu erzeugen, wobei die Vorrichtung ferner **dadurch gekennzeichnet ist, dass** sie Folgendes umfasst:
- eine Auswertevorrichtung (4), welche die Wechselwirkungssignale (SCi) des Empfängers (23) empfängt, um sie pro Bewegungssequenz der Schiene zu zählen, wobei diese Zählung der linearen Komponente der relativen Verschiebebewegung (ΔH) der Schiene aus der Ruheposition des Index (3) entspricht.

2. Messvorrichtung nach Anspruch 1,
**dadurch gekennzeichnet, dass**
die Lichtschranke von zwei Sendern (21) und von zwei entsprechenden Empfängern (23) gebildet wird.

3. Messvorrichtung nach Anspruch 1,
**dadurch gekennzeichnet, dass**
die aktiven Zonen lichtundurchlässigen Zonen entsprechen, die den Strahl schneiden, wobei diese lichtundurchlässigen Zonen durch transparente Zonen getrennt sind, die den Strahl durchlassen oder die aktiven Zonen reflektierenden Zonen entsprechen, die den Strahl zurückschicken.

4. Messvorrichtung nach Anspruch 1,
**dadurch gekennzeichnet, dass**
sie eine Zentralstation (5) umfasst, die mit einem Empfänger (51) versehen ist, wobei die Vorrichtung (100), die in der Nähe der Schiene installiert ist, einen Sender (46) zum Aussenden der Signale der Auswertevorrichtung (4) zur Zentralstation (5) umfasst.

5. Messvorrichtung nach Anspruch 4,
**dadurch gekennzeichnet, dass**
sie ein Geolokalisierungssystem (48) zum Liefern der Position der Messvorrichtung (100) an die Zentralstation (5) umfasst.

6. Messvorrichtung nach Anspruch 1,
**dadurch gekennzeichnet, dass**
sie einen Vibrationssensor (49) umfasst, der die Vibrationen detektiert, um die Lichtschranke bei der Durchfahrt eines Zuges zu aktivieren und die Lichtschranke zu deaktivieren, wenn sich die Schiene im Ruhezustand befindet.

7. Messvorrichtung nach Anspruch 1,
**dadurch gekennzeichnet, dass**
sie eine Uhr (47) umfasst, um den Bewegungssequenzen eine Zeit zuzuordnen.

## Claims

1. Device for measuring the linear component in a given direction (D) of the movement of a rail (R) when a train passes, comprising:
- a light barrier which is fixedly joined to the track infrastructure and which is insulated from the impacts of trains passing on the rail and which is formed by at least one transmitter (21) of a light beam (22) to a corresponding receiver (23),
- an index (3) which is fixedly joined to the movement of the rail (R),
the device being **characterised in that** the index is formed by a succession of active zones (32) of a given spacing (d), the active zones being opaque or reflective zones which intersect the beam and which are separated by transparent zones, this index being placed in the light beam (22) in order to cooperate with the beam (22),
the index (3) cooperating with the beam via the displacement movement (ΔH) of the rail (R) via the active zones which alternately intersect the beam in order to generate a succession of interaction signals (SCi) of the beam (22) in the corresponding receiver (23), the device further being **characterised in that** it comprises
- an operating device (4) which receives the interaction signals (SCi) of the receiver (23) in order to count them by movement sequence of the rail, this counting corresponding to the linear component of the relative displacement movement (ΔH) of the rail starting from the rest position of the index (3) .

2. Measurement device according to claim 1,
**characterised in that**
the light barrier is formed by two transmitters (21) and two corresponding receivers (23).

3. Measurement device according to claim 1,
**characterised in that**
the active zones are opaque zones which intersect the beam, these opaque zones being separated by transparent zones which allow the beam to pass or the active zones are reflective zones which return the beam.

4. Measurement device according to claim 1,
**characterised in that**
it comprises a central station (S) which is provided with a receiver (51), the device (100) installed close to the rail comprising a transmitter (46) for the transmission of the signals of the operating device (4) to the central station (5) .

5. Measurement device according to claim 4,
**characterised in that**
it comprises a geolocation system (48) for supplying the position of the measurement device (100) to the central station (5).

6. Measurement device according to claim 1,
**characterised in that**
it comprises a vibration sensor (49) which detects the vibrations in order to activate the light barrier when a train passes and to place the light barrier in standby mode when the rail is at rest.

7. Measurement device according to claim 1,
**characterised in that**
it comprises a clock (47) in order to assign a time to the movement sequences.
